# NEW EUROPEAN PATENT SPECIFICATION

(11) **EP 2 651 735 B2**
(45) Date of publication and mention of the opposition decision: **29.08.2018**
(45) Mention of the grant of the patent: 04.11.2015
(21) Application number: 10821441.2
(22) Date of filing: 17.12.2010
(51) Int. Cl.: B60T 17/02, F02B 37/00, F02M 35/10

(54) **METHOD FOR CONTROLLING A COMPRESSED AIR GENERATION SYSTEM OF AN AUTOMOTIVE VEHICLE, COMPRESSED AIR GENERATION SYSTEM ADAPTED TO SUCH A METHOD AND AUTOMOTIVE VEHICLE COMPRISING SUCH A SYSTEM**
VERFAHREN ZUR STEUERUNG EINES DRUCKLUFTERZEUGUNGSSYSTEM EINES KRAFTFAHRZEUGES, DRUCKLUFTERZEUGUNGSSYSTEM FÜR EIN SOLCHES VERFAHREN UND KRAFTFAHRZEUG MIT EINEM SOLCHEN SYSTEM
PROCÉDÉ POUR COMMANDER UN SYSTÈME DE PRODUCTION D'AIR COMPRIMÉ D'UN VÉHICULE AUTOMOBILE, SYSTÈME DE PRODUCTION D'AIR COMPRIMÉ CONÇU POUR UN TEL PROCÉDÉ ET VÉHICULE AUTOMOBILE COMPRENANT UN TEL SYSTÈME

(43) Date of publication of application: 23.10.2013
(73) Proprietor: Volvo Lastvagnar AB, 405 08 Göteborg (SE)
(72) Inventor: PETIT, Jean-Pascal, F-69250 Montanay (FR)
(74) Representative: Lavoix
(86) International application number: PCT/IB2010/003463
(87) International publication number: WO 2012/080770

(56) References cited:
- EP-A2- 0 162 222
- DE-A1-102009 007 690

## Description

### TECHNICAL FIELD OF THE INVENTION

The invention relates to a method for controlling a compressed air generation system for an automotive vehicle. The invention also concerns a compressed air generation system adapted to perform such a method and to an automotive vehicle comprising such a compressed air generation system.

### BACKGROUND OF THE INVENTION

Some automotive vehicles, such as trucks, are equipped with a compressed air system adapted to feed pneumatically-powered sub-systems such as a brake system. This involves an air compressor generally adapted to compress air to a pressure comprised between 8 and 12 bars.

In order to reduce the energy consumption of the compressor, it is known, for instance from US-B-4 652 216, to take previously compressed air from a turbocompressor generating compressed air using the energy of the exhaust gases of the vehicle. This permits to compress air from approximately 1 to 2 bars instead of compressing air from the atmospheric pressure, and therefore to increase the air delivery of the compressor.

These techniques do not permit to take enough compressed air when the engine of the vehicle is at a low speed and when the turbocompressor does not generate a sufficient air pressure. In such a case, the main compressor of the vehicle does not deliver a significant flow increase compared to a standard air compressor using naturally aspirated air. Taking compressed air from the turbocompressor when the turbocompressor does not generate a lot a compressed air can also lead to a lack of air available for the engine of the vehicle and then affect engine performance.

### SUMMARY

The invention aims at proposing a new method for improving the efficiency of a compressed air generation system of an automotive vehicle, which permits to generate more compressed air for pneumatic sub-systems at a low cost, without reducing the amount of air available for the engine of the vehicle and avoiding compressed air shortages in case of low compressed air generation by the turbocompressor of the vehicle.

To this end, the invention concerns a method for controlling a compressed air generation system of an automotive vehicle, as defined in claim 1.

Thanks to the invention, in case the turbocompressor does not generate enough air to feed the main compressor, the auxiliary compressor is adapted to compress air at a certain pressure above atmospheric pressure, whatever the engine operating point, allowing to increase the air flow delivery of the main compressor. For instance, feeding the main air compressor at around 2 bar will approximately double its air flow delivery. This permits to maximize the production of compressed air, for example during the braking phases and thus may reduce the cost of compressed air on a complete vehicle duty cycle.

The invention further concerns a method for controlling a compressed air generation system of an automotive vehicle, as defined in claim 2.

Further aspects of the invention which are advantageous but not compulsory, are specified in the claims 3 to 6.

The invention also concerns a compressed air generation system for an automotive vehicle, as defined in claim 7.

Selection can be performed for example on the basis of parameters representing the operating state of the internal combustion engine and/or the operating state of the turbocompressor.

Further aspects of the invention which are advantageous but not compulsory are defined in the claims 8 to 15.

The invention also relates to an automotive vehicle comprising an internal combustion engine. This vehicle is characterized in that it comprises an above-mentioned compressed air generation system. According to a further aspect of the invention, this vehicle comprises an exhaust after-treatment system fed with air compressed by the compressed air generation system.

### BRIEF DESCRIPTION OF THE DRAWINGS

The invention will now be explained in correspondence with the annexed figures and as an illustrative example without restricting the object of the invention. In the annexed figures:
- Figure 1 is a schematic view of a portion of an automotive vehicle and a compressed air generation system not according to a first embodiment of the invention;
- Figure 2 is a schematic view similar to figure 1, for a second embodiment of the invention;
- Figure 3 is a schematic view similar to figures 1 and 2, for a third embodiment of the invention;
- Figure 4 is a schematic view similar to figures 1 to 3, for a fourth embodiment of the invention.

### DETAILED DESCRIPTION OF SOME EMBODIMENTS

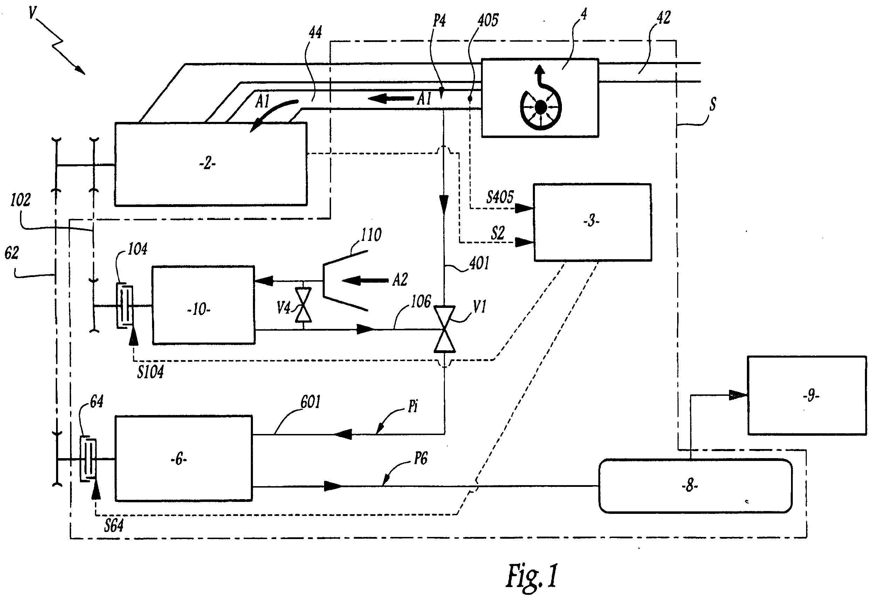

As represented on figures 1 to 4, an automotive vehicle V comprises an internal combustion engine 2 adapted to be fed with compressed air produced by a turbocompressor 4. Turbocompressor 4 produces compressed air from air at atmospheric pressure thanks to its compressor which is driven by its turbine, the latter using the energy of exhaust gases flowing in an exhaust line 42 of the vehicle V. Compressed air is driven, as shown by arrows A1, from turbocompressor 4 to engine 2 through an outlet pipe 44, also named "intake air pipe" with reference to engine 2. Vehicle V comprises a main air compressor 6 which is, in this example, driven by engine 2, for example thanks to a belt 62 driven by an output shaft 22 of engine 2. Main compressor 6 can be connected and disconnected from belt 62 thanks to an optional clutch 64, in order to run the compressor only when there is a need for compressed air, so that the energy consumed by the compressor is minimized. Other suitable means to activate and deactivate the compressor are described for example in documents DE 39 09 531 A1 and DE 40 26 684. For example, main compressor 6 can be a piston compressor.

Main compressor 6 is adapted to feed a compressed air tank 8 in which compressed air is stored in order to feed one or several pneumatically driven sub-systems of vehicle V, such as a brake system 9.

Vehicle V comprises an auxiliary mechanical compressor 10, which is distinct from the main compressor and from the turbocompressor. In some embodiments, the auxiliary compressor is mechanically driven by engine 2, for example thanks to a belt 102 driven by shaft 22. For example, auxiliary compressor 10 can be a "Roots" compressor. Preferably, the auxiliary compressor can be activated or de-activated. For example, it can be connected and disconnected from belt 102 thanks to a clutch 104, or the compressor may be activated and deactivated by other means, such as mentioned above.

According to non-shown alternate embodiments, compressor 6 and/or auxiliary compressor may be driven by engine 2 thanks to a gear train or a chain.

Main compressor 6 is adapted to compress air provided either by turbocompressor 4 or by auxiliary compressor 10. Main compressor 6 is fed by a feeding pipe 601 which originates from an outlet pipe 106 connecting auxiliary compressor 10 to main compressor 6. A turbocompressor outlet pipe 401 connects turbocompressor 4 to feeding pipe 601 More precisely, the turbocompressor outlet pipe 401 may be connected anywhere in the air intake pipe 44, i.e. from the outlet of the turbocompressor compressor to the intake manifold of the engine. In the shown example, turbocompressor outlet pipe 401, auxiliary compressor outlet pipe 106 and feeding pipe 601 are connected to each other by selecting means which can be embodied as a three-way valve V1. In another embodiment, the turbocompressor outlet pipe 401 and the auxiliary compressor outlet pipe 106 could be separately connected to the feeding pipe 601 of the main compressor, each through a dedicated valve.

Auxiliary compressor is fed by an auxiliary feeding pipe or inlet pipe 108, which originates from an exterior air intake 110. Exterior air is represented by an arrow A2. Feeding pipe 108 and outlet pipe 106 are connected to each other by a recirculation valve V4 adapted to by-pass partly or totally the auxiliary compressor 10 in order to adjust the pressure level at the intake of main compressor 6. This pressure level can be adjusted to optimize the global efficiency of the system whatever the engine operating conditions.

Vehicle V comprises an electronic control unit 3, which is adapted to control the selecting means, i.e. valves V1 and V4, thanks to non-shown electronic signals. Electronic control unit 3 may also be adapted to receive information concerning the operating state of internal combustion engine 2, such as output torque or rotation speed. This information is sent by a non shown communication device of internal combustion engine 2 to electronic control unit 3 thanks to an electronic signal S2. Electronic control unit can comprise one or several physical devices, which may communicate for example though a databus.

A pressure sensor 405 may be mounted in intake air pipe 44 of turbocompressor 4. This sensor is adapted to detect the pressure P4 of the compressed air flowing out of turbocompressor 4, and to send to electronic control unit 3 this information thanks to an electronic signal S405.

Electronic control unit 3 is adapted to pilot clutch 104 in order to activate or deactivate the operation of auxiliary compressor 10. This is done by an electronic signal S104.

Electronic control unit 3 is adapted to pilot clutch 64 in order to activate or deactivate the operation of main compressor 6. This is done by an electronic signal S64.

Turbo compressor 4, main compressor 6, auxiliary compressor 10, air tank 8, electronic control unit 3, clutches 64 and 104, and the various valves and pipes which link together these elements define together a compressed air generating system S of vehicle V.

The method according to the invention is, in this example, implemented as follows: in order to reduce the cost of the compressed air which is stored in air tank 8, already compressed air is provided to main compressor 6 to reduce the energy absorbed by compressor 6 to feed air tank 8. In the present example, main compressor 6 is adapted to compress air to a pressure P6 equal to 12 bars from air at an intermediate pressure Pi comprised between 1 and 3 bars.

To compress air from the atmospheric pressure to Pi, a first operating configuration uses air compressed by turbocompressor 4 to directly feed main compressor 6. Air pressure P4 in intake air pipe 44 is measured by sensor 405, and the operating state of engine 2 is watched to determine, for example, if engine 2 is in an engine brake phase. If air pressure P4 on the outlet of turbocompressor 4 is high enough to feed main compressor 6, that means if P4 is equal or superior to Pi, the selecting means, here embodied as three-way valve V1, are controlled by electronic control unit 3 so that valve V1 allows air flow from outlet pipe 401 to feed pipe 601 of main compressor 6.

If engine 2 is in specific engine operating conditions, for example during engine braking or at low loaded points in the positive power phase, it can be preferable that compressed air from turbocompressor 4 is not provided to main compressor 6.

In the first configuration, while valve V1 allows passage of air from pipe 401 to pipe 601, valve V4 may be closed and clutch 104 may be opened so that auxiliary compressor 10 remains idle. In the first operating configuration, it is taken advantage of the fact that the energy necessary to compress air from atmospheric pressure to pressure P4 is energy recovered by the turbine from the exhaust gases, which energy would otherwise be wasted.

In other states of the system, for example if air pressure P4 measured by sensor 405 is not high enough to feed main compressor 6 and/or internal combustion engine 2 is in specific engine operating conditions (as mentioned above), a second operating configuration of compressed air generation system S may be implemented. In this second configuration, main compressor 6 is fed with air compressed by auxiliary compressor 10. For example, once electronic control unit 3 has determined that conditions are not fulfilled to feed main compressor 6 with air compressed by turbocompressor 4, electronic control unit 3 may pilot clutch 104 so that engine 2 drives auxiliary compressor 10. In that case, valve V1 may be controlled by control unit 3 so as to allow passage of compressed air from outlet pipe 106 of auxiliary compressor 10 to feeding pipe 601 of main compressor 6. At the same time, air intake 110 may be controlled by control unit 3 so that exterior air is driven into auxiliary compressor 10 in order to be compressed from the atmospheric pressure to pressure Pi. In this second configuration, especially if the engine is in engine brake mode, the energy necessary to drive both compressors is in fact the kinetic energy of the vehicle which is recovered through the engine.

In the following embodiments, elements similar to the first embodiment bear the same references, and work in the same way.

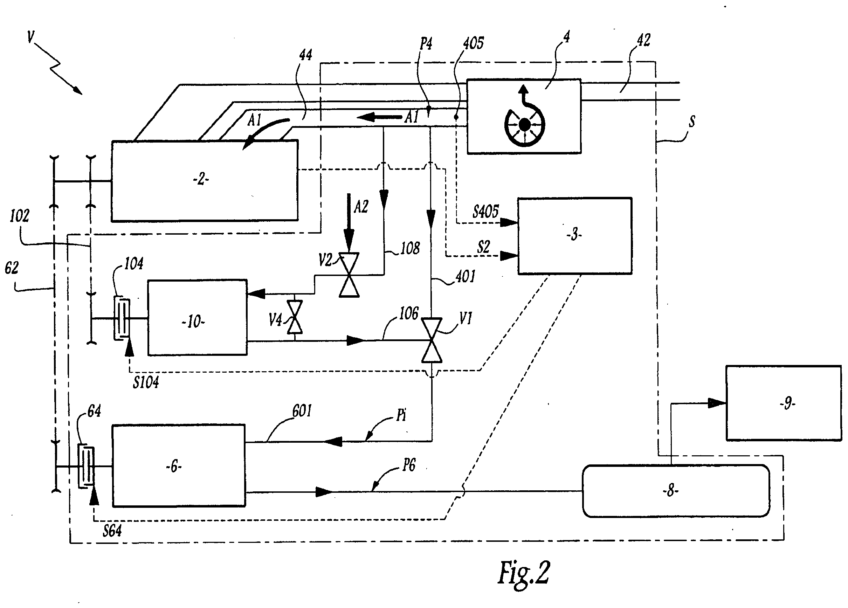

A second embodiment of the invention is represented on figure 2. In this embodiment, auxiliary compressor 10 can use air compressed by turbocompressor 4 instead of air taken on the outside of vehicle V. Auxiliary compressor 10 is fed by an auxiliary feeding pipe 108, which originates from intake air pipe 44. A three-way valve V2 is mounted on feeding pipe 108 and is adapted to allow passage of air coming either from the exterior of vehicle V or from intake air pipe 44. In that case, and if specific conditions are fulfilled, electronic control unit 3 may control valve V2 so as to allow air flow from air intake pipe 44 to auxiliary compressor 10.

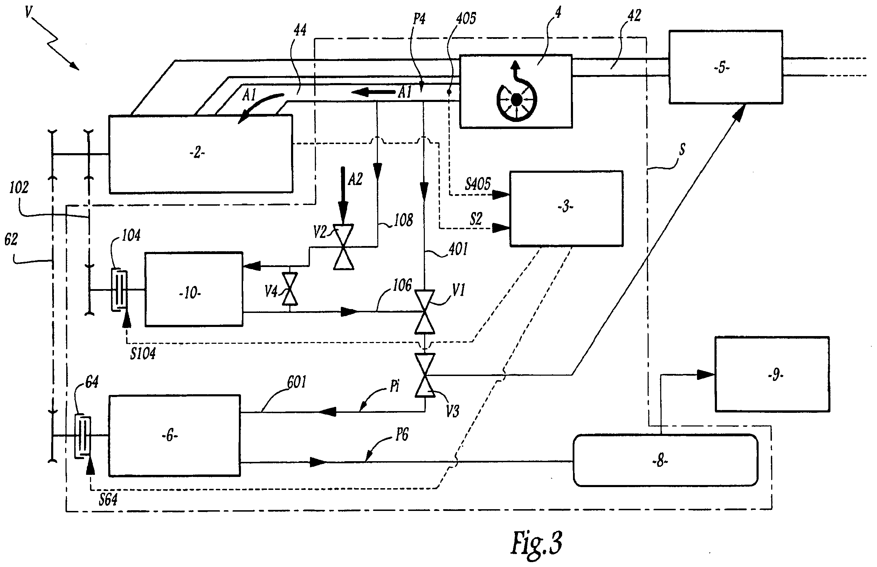

A third embodiment of the invention is represented on figure 3. In this embodiment, vehicle V is equipped with an exhaust after-treatment system or EATS 5, which is adapted to eliminate pollutant particulates or nitrogen oxides flowing in the exhaust gases of engine 2. Such a system may need an air flow to regenerate a particulate filter or to maintain exhaust gases temperature at a sufficient value to have good EATS efficiency. Feeding pipe 601 of main compressor 6 therefore comprises a three way valve V3 which is adapted to direct a given amount of air towards exhaust after-treatment system 5. Valve V3 is controlled by electronic control unit 3 by a non-shown electronic signal.

If it is possible, that means if compressed air needs of the pneumatic sub-systems of vehicle V are not too high, a portion of the compressed air can be taken from feeding pipe 601 to feed exhaust after-treatment system 5. In such a case, electronic control unit 3 controls valve V3 so as to allow air flow towards exhaust after-treatment system 5.

According to a non-shown embodiment, system S can comprise a cooling device adapted to reduce air temperature between auxiliary compressor 10 and main compressor 6. This device may be mounted for example on pipe 106 or on pipe 601.

The invention may allow reducing the cost of the compressed air stored in air tank 8. In the two operating configurations mentioned above, the compressed air generating system S involves a two stages compression process which provides compressed air at a lowest cost than a single stage compressing process and allows maximizing air flow delivery during braking phase, where energy necessary to drive the compressors is essentially free.

Moreover, when the auxiliary compressor 10 is mechanically driven by internal combustion engine 2, it can provide supplementary engine brake which increases the efficiency of the engine brake of vehicle V in slowing phases.

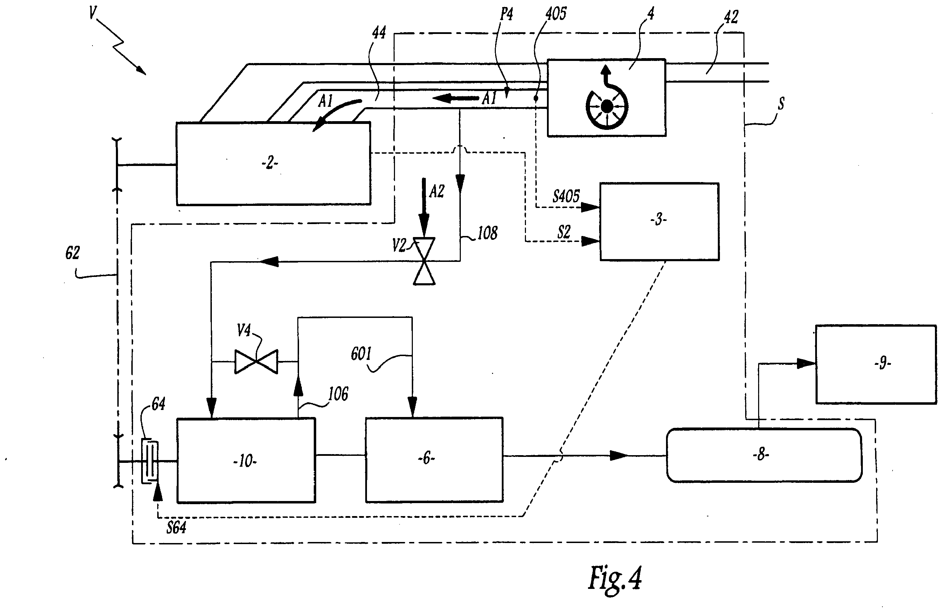

A fourth embodiment of the invention is represented on figure 4. In this embodiment, main compressor 6 and auxiliary compressor 10 are driven by a common shaft driven by a belt, a gear train or a chain 62 through a clutch 64.

According to another aspect which is represented on figure 4, and which can be implemented independently in the other embodiments, compressed air generating system S comprises no valve V1, and valve V2 is controlled so as to connect main compressor 6 to intake air pipe 44 or to an exterior air intake, via auxiliary compressor 10 or valve V4.

According to a non-shown embodiment of the invention, auxiliary compressor 10 can be an electrically-driven compressor fed by an energy storage system on board vehicle V.

According to a third operating configuration of system S which can be implemented with any of the embodiments of the invention, main compressor 6 can, for some operating conditions, be fed with exterior air rather than with pre-compressed air coming from the turbocompressor or from the air compressor. To achieve this configuration, in embodiments represented on Figures 1 to 3, valve V1 can be controlled so as to block passage of air from outlet pipe 401 to main compressor 6, valve V2 can be controlled to block passage of air from engine air intake pipe 44 to auxiliary compressor 10, and recirculation valve V4 can be controlled so as to by-pass auxiliary compressor 10. In this case, main compressor 6 compresses air taken from the outside of vehicle V, as shown by arrow A2.

It must be noted that the technical features of the above-described embodiments can be combined within in the scope of the invention. The air pressure values Pi and P6 mentioned in this example are not limitative. The inlet and outlet air pressures of main compressor 6 can be different from 3 bars and 12 bars. The compressing ability of auxiliary compressor 10 can also be different from the ability to compress air from the atmospheric pressure to 3 bars. The threshold pressure above which air is taken from the outlet of turbocompressor 4 can be different from 3 bars.

## Claims

1. Method for controlling a compressed air generation system (S) of an automotive vehicle (V), the system comprising a turbocompressor (4) feeding an internal combustion engine (2) of the vehicle with compressed air, and a main compressor (6) feeding a compressed air tank (8), the main compressor (6) being adapted to use air compressed by the turbocompressor (4) to feed the compressed air tank (8), wherein the method provides:
a) feeding selectively the main compressor (6) with air compressed either by the turbocompressor (4) or by an auxiliary air compressor (10), on the basis of parameters (S2, P4) representing the operating state of the internal combustion engine (2) and/or the operating state of the turbocompressor (4),
wherein the auxiliary compressor (10) is fed with air (A2) taken from the outside of the vehicle (V),
and wherein if the internal combustion engine (2) is in an engine brake phase, the main compressor (6) is fed with air (A2) compressed by the auxiliary compressor (10).

2. Method for controlling a compressed air generation system (S) of an automotive vehicle (V), the system comprising a turbocompressor (4) feeding an internal combustion engine (2) of the vehicle with compressed air, and a main compressor (6) feeding a compressed air tank (8), the main compressor (6) being adapted to use air compressed by the turbocompressor (4) to feed the compressed air tank (8), wherein the method provides:
a) feeding selectively the main compressor (6) with air compressed either by the turbocompressor (4) or by an auxiliary air compressor (10), on the basis of parameters (S2, P4) representing the operating state of the internal combustion engine (2) and/or the operating state of the turbocompressor (4),
and wherein the auxiliary compressor (10) is fed with air compressed by the turbocompressor (4).

3. Method according to claim 2, wherein if the internal combustion engine (2) is in an engine brake phase, the main compressor (6) is fed with air (A2) compressed by the auxiliary compressor (10).

4. Method according to one of the preceding claims, wherein the method provides feeding selectively the main compressor (6) with air compressed either by the turbocompressor (4), or by an auxiliary air compressor (10), or feeding the main compressor (6) directly with air (A2) taken from the outside of the vehicle (V) on the basis of parameters (S2, P4) representing the operating state of the internal combustion engine (2) and/or the operating state of the turbocompressor (4).

5. Method according to one of the preceding claims, wherein it provides :
b) taking compressed air from the outlet (106) of the auxiliary compressor (10) to feed an exhaust gases after-treatment system (5) of the vehicle (V).

6. Method according to one of the preceding claims, wherein it provides:
c) cooling compressed air between the turbocompressor (4) and the main compressor (6) and/or between the auxiliary compressor (10) and the main compressor (6).

7. Compressed air generation system (S) for an automotive vehicle (V), comprising a turbocompressor (4) feeding an internal combustion engine (2) with compressed air, and a main compressor (6) feeding a compressed air tank (8), a feeding pipe (601) of the main compressor (6) being connected to an outlet pipe (401) of the turbocompressor (4), wherein it comprises an auxiliary compressor (10) having an outlet pipe (106) connected to the feeding pipe (601) of the main compressor (6) and wherein it comprises means (3, V1, V2) to selectively connect the feeding pipe (601) of the main compressor (6) to the outlet pipe (401) of the turbocompressor (4) or to the outlet pipe (106) of the auxiliary compressor (10), and wherein the inlet pipe (108) of the auxiliary compressor (10) is connected to the outlet pipe (401) of the turbocompressor (4).

8. System according to claim 7, wherein the system further comprises means to directly connect the feeding pipe of the main compressor to the outside of the vehicle (V).

9. System according to claim 7 or 8, wherein the auxiliary compressor (10) is mechanically driven by the internal combustion engine (2).

10. System according to claim 9, wherein it comprises means (104) for activating and deactivating the auxiliary compressor (10).

11. System according to claim 7 or 8, wherein the auxiliary compressor (10) is an electrically-driven compressor.

12. System according to one of claims 7 to 11, wherein the means (3, V1, V2) to selectively feed the main compressor (6) comprise an electronic control unit (3).

13. System according to claim 12, wherein the electronic control (3) unit is adapted to receive information (S2) relative to the operating state of the internal combustion engine (2).

14. System according to one of claims 12 or 13, wherein it comprises means (405) to monitor the operating state of the turbocompressor (4) and to send information (P4) with this respect to the electronic control unit (3).

15. System according to claim 14, wherein the means to monitor the operating state of the turbocompressor (4) comprise a pressure sensor (405) adapted to measure the air pressure (P4) at the outlet (44) of the turbocompressor (4).

16. Automotive vehicle (V) comprising an internal combustion engine (2), wherein it comprises a compressed air generation system (S) according to one of claims 7 to 15 .

17. Automotive vehicle according to claim 16, wherein it comprises an exhaust after-treatment system (5) fed with air compressed by the compressed air generation system (S).

## Patentansprüche

1. Verfahren zu Steuerung eines Drucklufterzeugungssystems (S) eines Kraftfahrzeugs (V), wobei das System einen Turbokompressor (4), der einen Verbrennungsmotor (2) des Fahrzeugs mit komprimierter Luft speist, und einen Hauptkompressor (6) umfasst, der einen Drucklufttank (8) speist, wobei der Hauptkompressor (6) so ausgelegt ist, dass er durch den Turbokompressor (4) verdichtete Luft verwendet, um den Drucklufttank (8) zu speisen, wobei das Verfahren vorsieht:
a) selektives Speisen des Hauptkompressors (6) mit Luft, die entweder durch den Turbokompressor (4) oder durch einen Hilfsluftkompressor (10) komprimiert wurde, auf der Basis von Parametern (S2, P4), die den Betriebszustand des Verbrennungsmotors (2) und/oder den Betriebszustand des Turbokompressors (4) repräsentieren,
wobei der Hilfskompressor (10) mit Luft (A2) gespeist wird, die von außerhalb des Fahrzeugs (V) genommen wird,
und wobei, wenn sich der Verbrennungsmotor (2) in einer Motorbremsphase befindet, der Hauptkompressor (6) mit Luft (A2) gespeist wird, die von dem Hilfskompressor (10) komprimiert wurde.

2. Verfahren zu Steuerung eines Drucklufterzeugungssystems (S) eines Kraftfahrzeugs (V), wobei das System einen Turbokompressor (4), der einen Verbrennungsmotor (2) des Fahrzeugs mit komprimierter Luft speist, und einen Hauptkompressor (6) umfasst, der einen Drucklufttank (8) speist, wobei der Hauptkompressor (6) so ausgelegt ist, dass er durch den Turbokompressor (4) verdichtete Luft verwendet, um den Drucklufttank (8) zu speisen, wobei das Verfahren vorsieht:
a) selektives Speisen des Hauptkompressors (6) mit Luft, die entweder durch den Turbokompressor (4) oder durch einen Hilfsluftkompressor (10) komprimiert wurde, auf der Basis von Parametern (S2, P4), die den Betriebszustand des Verbrennungsmotors (2) und/oder den Betriebszustand des Turbokompressors (4) repräsentieren,
und wobei der Hilfskompressor (10) mit Luft gespeist wird, die durch den Turbokompressor (4) komprimiert wurde.

3. Verfahren nach Anspruch 2, wobei, wenn sich der Verbrennungsmotor (2) in einer Motorbremsphase befindet, der Hauptkompressor (6) mit Luft (A2) gespeist wird, die von dem Hilfskompressor (10) komprimiert wurde.

4. Verfahren nach einem der vorhergehenden Ansprüche, wobei das Verfahren das selektive Speisen des Hauptkompressors (6) mit Luft, die entweder durch den Turbokompressor (4) oder durch einen Hilfsluftkompressor (10) komprimiert wurde, oder das Speisen des Hauptkompressors (6) direkt mit Luft (A2) vorsieht, die von außerhalb des Fahrzeugs (V) genommen wurde, auf der Basis von Parametern (S2, P4), die den Betriebszustand des Verbrennungsmotors (2) und/oder den Betriebszustand des Turbokompressors (4) repräsentieren.

5. Verfahren nach einem der vorhergehenden Ansprüche, wobei es vorsieht:
b) Entnahme von Druckluft von dem Auslass (106) des Hilfskompressors (10) zur Speisung eines Abgasnachbehandlungssystems (5) des Fahrzeugs (V).

6. Verfahren nach einem der vorhergehenden Ansprüche, wobei es vorsieht:
c) Kühlen komprimierter Luft zwischen dem Turbokompressor (4) und dem Hauptkompressor (6) und/oder zwischen dem Hilfskompressor (10) und dem Hauptkompressor.

7. Drucklufterzeugungssystem (S) für ein Kraftfahrzeug (V), das einen Turbokompressor (4), der einen Verbrennungsmotor (2) mit komprimierter Luft speist, und einen Hauptkompressor (6) umfasst, der einen Drucklufttank (8) speist, wobei eine Zufuhrleitung (601) des Hauptkompressors (6) mit einer Auslassleitung (401) des Turbokompressors (4) verbunden ist, wobei es einen Hilfskompressor (10) mit einer Auslassleitung (106) umfasst, die mit der Zufuhrleitung (601) des Hauptkompressors (6) verbunden ist, und wobei es Einrichtungen (3, V1, V2) zur selektiven Verbindung der Zufuhrleitung (601) des Hauptkompressors (6) mit der Auslassleitung (401) des Turbokompressors (4) oder mit der Auslassleitung (106) des Hilfskompressors (10) umfasst, und wobei die Einlassleitung (108) des Hilfskompressors (10) mit der Auslassleitung (401) des Turbokompressors (4) verbunden ist.

8. System nach Anspruch 7, wobei das System außerdem Einrichtungen umfasst, die die Zufuhrleitung des Hauptkompressors direkt mit der Außenseite des Fahrzeugs (V) verbinden.

9. System nach Anspruch 7 oder 8, wobei der Hilfskompressor (10) mechanisch durch den Verbrennungsmotor (2) angetrieben wird.

10. System nach Anspruch 9, wobei es Einrichtungen (104) zur Aktivierung und Deaktivierung des Hilfskompressors (10) umfasst.

11. System nach Anspruch 7 oder 8, wobei der Hilfskompressor (10) ein elektrisch angetriebener Kompressor ist.

12. System nach einem der Ansprüche 7 bis 11, wobei die Einrichtungen (3, V1, V2) zur selektiven Speisung des Hauptkompressors (6) eine elektronische Steuereinheit (3) umfassen.

13. System nach Anspruch 12, wobei die elektronische Steuereinheit (3) dazu ausgelegt ist, Informationen (S2) bezüglich des Betriebszustands des Verbrennungsmotors (2) zu empfangen.

14. System nach einem der Ansprüche 12 oder 13, wobei es Einrichtungen (405) zur Überwachung des Betriebszustands des Turbokompressors (4) und zum Senden diesbezüglicher Informationen (P4) an die elektronische Steuereinheit (3) umfasst.

15. System nach Anspruch 14, wobei die Einrichtungen zur Überwachung des Betriebszustands des Turbokompressors (4) einen Drucksensor (405) umfassen, der dazu ausgelegt ist, den Luftdruck (P4) an dem Auslass (44) des Turbokompressors (4) zu messen.

16. Kraftfahrzeug (V) mit einem Verbrennungsmotor (2), wobei es ein Drucklufterzeugungssystem (S) nach einem der Ansprüche 7 bis 15 umfasst.

17. Kraftfahrzeug nach Anspruch 16, wobei es ein Abgasnachbehandlungssystem (5) umfasst, das mit Luft gespeist wird, die durch das Drucklufterzeugungssystem (S) komprimiert wurde.

## Revendications

1. Procédé de commande d'un système de production d'air comprimé (S) d'un véhicule automobile (V), le système comprenant un turbocompresseur (4) alimentant en air comprimé un moteur à combustion interne (2) du véhicule, et un compresseur principal (6) alimentant un réservoir d'air comprimé (8), le compresseur principal (6) étant adapté pour utiliser l'air comprimé par le turbocompresseur (4) pour alimenter le réservoir d'air comprimé (8), **caractérisé en ce que** le procédé réalise :
a) l'alimentation de façon sélective du compresseur principal (6) en air comprimé soit par le turbocompresseur (4), soit par un compresseur d'air auxiliaire (10), sur la base de paramètres (S2, P4) qui représentent l'état de fonctionnement du moteur à combustion interne (2) et/ou l'état de fonctionnement du turbocompresseur (4),
**en ce que** le compresseur auxiliaire (10) est alimenté en air (A2) collecté à l'extérieur du véhicule (V),
et **en ce que** si le moteur à combustion interne (2) est dans une phase de freinage moteur, le compresseur principal (6) est alimenté en air (A2) comprimé par le compresseur auxiliaire (10).

2. Procédé de commande d'un système de production d'air comprimé (S) d'un véhicule automobile (V), le système comprenant un turbocompresseur (4) alimentant en air comprimé un moteur à combustion interne (2) du véhicule, et un compresseur principal (6) alimentant un réservoir d'air comprimé (8), le compresseur principal (6) étant adapté pour utiliser l'air comprimé par le turbocompresseur (4) pour alimenter le réservoir d'air comprimé (8), **caractérisé en ce que** le procédé réalise :
a) l'alimentation de façon sélective du compresseur principal (6) en air comprimé soit par le turbocompresseur (4), soit par un compresseur d'air auxiliaire (10), sur la base de paramètres (S2, P4) qui représentent l'état de fonctionnement du moteur à combustion interne (2) et/ou l'état de fonctionnement du turbocompresseur (4),
et **en ce que** le compresseur auxiliaire (10) est alimenté en air comprimé par le turbocompresseur (4).

3. Procédé selon la revendication 2, **caractérisé en ce que** si le moteur à combustion interne (2) est dans une phase de freinage moteur, le compresseur principal (6) est alimenté en air (A2) comprimé par le compresseur auxiliaire (10).

4. Procédé selon l'une des revendications précédentes, **caractérisé en ce que** le procédé réalise l'alimentation de façon sélective du compresseur principal (6) en air comprimé soit par le turbocompresseur (4), soit par un compresseur d'air auxiliaire (10), ou l'alimentation du compresseur principal (6) directement avec de l'air (A2) collecté à l'extérieur du véhicule (V) sur la base de paramètres (S2, P4) qui représentent l'état de fonctionnement du moteur à combustion interne (2) et/ou l'état de fonctionnement du turbocompresseur (4).

5. Procédé selon l'une des revendications précédentes, **caractérisé en ce que** le procédé réalise:
b) la collecte d'air comprimé à partir de l'orifice de sortie (106) du compresseur auxiliaire (10) afin d'alimenter un système (5) de post-traitement des gaz d'échappement du véhicule (V).

6. Procédé selon l'une des revendications précédentes, **caractérisé en ce que** le procédé réalise :
c) le refroidissement de l'air comprimé entre le turbocompresseur (4) et le compresseur principal (6) et/ou entre le compresseur auxiliaire (10) et le compresseur principal (6).

7. Système de production d'air comprimé (S) pour un véhicule automobile (V), comprenant un turbocompresseur (4) alimentant en air comprimé un moteur à combustion interne (2), et un compresseur principal (6) alimentant un réservoir d'air comprimé (8), un tuyau d'alimentation (601) du compresseur principal (6) étant connecté à un tuyau de sortie (401) du turbocompresseur (4), **caractérisé en ce qu'**il comprend un compresseur auxiliaire (10) comprenant un tuyau de sortie (106) connecté au tuyau d'alimentation (601) du compresseur principal (6), et **en ce qu'**il comprend des moyens (3, V1, V2) pour connecter de façon sélective le tuyau d'alimentation (601) du compresseur principal (6) au tuyau de sortie (401) du turbocompresseur (4) ou au tuyau de sortie (106) du compresseur auxiliaire (10), et **en ce que** le tuyau d'entrée (108) du compresseur auxiliaire (10) est connecté au tuyau de sortie (401) du turbocompresseur (4).

8. Système selon la revendication 7, **caractérisé en ce que** le système comprend en outre des moyens pour connecter directement le tuyau d'alimentation du compresseur principal à l'extérieur du véhicule (V).

9. Système selon la revendication 7 ou 8, **caractérisé en ce que** le compresseur auxiliaire (10) est entraîné mécaniquement par le moteur à combustion interne (2).

10. Système selon la revendication 9, **caractérisé en ce qu'**il comprend des moyens (104) pour activer et désactiver le compresseur auxiliaire (10).

11. Système selon la revendication 7 ou 8, **caractérisé en ce que** le compresseur auxiliaire (10) est un compresseur entraîné électriquement.

12. Système selon l'une des revendications 7 à 11, **caractérisé en ce que** les moyens (3, V1, V2) pour alimenter de façon sélective le compresseur principal (6) comprennent une unité de commande électronique (3).

13. Système selon la revendication 12, **caractérisé en ce que** l'unité de commande électronique (3) est apte à recevoir des informations (S2) relatives à l'état de fonctionnement du moteur à combustion interne (2).

14. Système selon l'une des revendications 12 ou 13, **caractérisé en ce qu'**il comprend des moyens (405) pour surveiller l'état de fonctionnement du turbocompresseur (4) et pour envoyer des informations (P4) à cet égard à l'unité de commande électronique (3).

15. Système selon la revendication 14, **caractérisé en ce que** les moyens pour surveiller l'état de fonctionnement du turbocompresseur (4) comprennent un capteur de pression (405) qui est apte à mesurer la pression d'air (P4) à la sortie (44) du turbocompresseur (4).

16. Véhicule automobile (V) comprenant un moteur à combustion interne (2), **caractérisé en ce qu'**il comprend un système de production d'air comprimé (S) selon l'une des revendications 7 à 15.

17. Véhicule automobile selon la revendication 16, **caractérisé en ce qu'**il comprend un système (5) de post-traitement des gaz d'échappement alimenté en air comprimé par le système de production d'air comprimé (S).
